# EUROPÄISCHE PATENTSCHRIFT

(11) **EP 3 088 212 B1**
(45) Veröffentlichungstag und Bekanntmachung des Hinweises auf die Patenterteilung: **25.03.2020**
(21) Anmeldenummer: 16153056.3
(22) Anmeldetag: 28.01.2016
(51) Int. Cl.: B60C 11/12

(54) **FAHRZEUGLUFTREIFEN**
PNEUMATIC TYRES FOR A VEHICLE
PNEUMATIQUES DE VÉHICULE

(30) Priorität: 28.04.2015 DE 102015207734
(43) Veröffentlichungstag der Anmeldung: 02.11.2016
(73) Patentinhaber: Continental Reifen Deutschland GmbH, 30165 Hannover (DE)
(72) Erfinder: Bederna, Christoph, 30890 Barsinghausen (DE); Wiese, Klaus, 30559 Hannover (DE)
(74) Vertreter: Finger, Karsten

(56) Entgegenhaltungen:
- EP-A1- 1 529 661
- EP-A1- 3 228 480
- WO-A1-2015/091331
- JP-A- 2006 151 231

## Beschreibung

Die Erfindung betrifft einen Fahrzeugluftreifen mit einem profilierten Laufstreifen mit durch Rillen von einander beabstandeten, radial erhabenen Profilelementen, welche in radialer Richtung nach außen hin durch eine radial äußere, die Bodenkontaktfläche bildende radial äußere Oberfläche begrenzt werden, wobei in der radial äußeren Oberfläche von wenigstens einem Profilelement in Umfangsrichtung U des Fahrzeugluftreifens hintereinander angeordnet Feineinschnitte ausgebildet sind, die sich jeweils in axialer Richtung A des Fahrzeugluftreifens durch das Profilelement hindurch erstrecken und deren größte Richtungskomponente ihrer Erstreckung in axialer Richtung A des Fahrzeugluftreifens ausgerichtet ist, wobei jeweils zwischen zwei in Umfangsrichtung U benachbart hintereinander angeordneten Feineinschnitten ein Umfangserstreckungsabschnitt des Profilelementes ausgebildet ist.

Derartige Fahrzeugluftreifen sind bekannt.

Die Reibenergie beim Bremsen auf Eis wird im Wesentlichen durch zwei Mechanismen abgeleitet: Zum einen die Erwärmung des Eises und somit die Wärmeleitung ins Eis und zum anderen das Aufschmelzen des Eises. Die Erwärmung des Eises kann durch das Profil kaum beeinflusst werden. Wesentlicher Faktor zur Erhöhung der Eisreibung ist daher die Erhöhung der Menge des aufgeschmolzenen Eises. Besonders wichtig ist dabei die Abführung des Schmelzwassers von der zwischen radial äußerer Oberfläche von Profilelementen und dem Eis bestehenden Reibfläche.

Es ist dabei bekannt Laufstreifenprofile mit Profilblockreihen auszubilden, in denen die radial äußere Oberfläche der Profilblockelemente mit vielen in Umfangsrichtung des Reifen hintereinander angeordneten kleinen Feineinschnitten ausgebildet sind, welche sich im Wesentlichen in axialer Richtung des Reifens und somit unter Einschluss eines Winkels von ca. 90° zur Gleitrichtung beim Bremsen bzw. Beschleunigen erstrecken. Es ist bekannt, dass durch diese Ausbildung mit vielen derart senkrecht zur Gleitrichtung ausgerichteten Feineinschnitten die Eisreibung deutlich erhöht werden kann. Allerdings steigt die Höhe des Schmelzwasserfilms unter dem Profilelement zwischen den Feineinschnitten sehr schnell an, so dass die Abfuhr des Schmelzwassers und damit der Griff auf Eis dennoch noch unerwünscht stark beeinträchtigt ist.

Aus der JP 2006 151231 A ist ein Fahrzeugluftreifen gemäß den Merkmalen des Oberbegriffs von Anspruch 1 bekannt, bei welchen die in der radial äußeren Oberfläche ausgebildeten Feinstrillen in geschlossener Linienform z.B. in Form einer Kreislinie ausgebildet sind, wobei sie teilweise Feineinschnitte schneiden und teilweise ohne Kontakt zu Feineinschnitten ausgebildet sind.

**Aus der nachveröffentlichten** EP 3 228 480 A1 **ist es ebenfalls bekannt in der radial äußeren Oberfläche von Profilelementen Feineinschnitte und zusätzliche Feinstrillen auszubilden, die in Feineinschnitte münden und mit ihrem anderen Erstreckungsende im Abstand von Feineinschnitten enden.**

Der Erfindung liegt die Aufgabe zugrunde, bei derartigen Fahrzeugluftreifen die Wasserabfuhr bei Eisreibung und somit den Griff auf Eis weiter zu verbessern.

Die Aufgabe wird erfindungsgemäß durch die Ausbildung eines Fahrzeugluftreifens mit einem profilierten Laufstreifen mit durch Rillen von einander beabstandeten, radial erhabenen Profilelementen, welche in radialer Richtung nach außen hin durch eine radial äußere, die Bodenkontaktfläche bildende radial äußere Oberfläche begrenzt werden, wobei in der radial äußeren Oberfläche von wenigstens einem Profilelement in Umfangsrichtung U des Fahrzeugluftreifens hintereinander angeordnet Feineinschnitte ausgebildet sind, die sich jeweils in axialer Richtung A des Fahrzeugluftreifens durch das Profilelement hindurch erstrecken und deren größte Richtungskomponente ihrer Erstreckung in axialer Richtung A des Fahrzeugluftreifens ausgerichtet ist, wobei jeweils zwischen zwei in Umfangsrichtung U benachbart hintereinander angeordneten Feineinschnitten ein Umfangserstreckungsabschnitt des Profilelementes ausgebildet ist, gemäß den Merkmalen von Anspruch 1 gelöst, bei dem in der radial äußeren Oberfläche in wenigstens einem Umfangserstreckungsabschnitt des Profilelementes mit einem Abstand d voneinander beabstandet Feinstrillen angeordnet sind, die jeweils mit einer Breite b mit b ≤ 0,3mm und mit einer Tiefe T mit T ≤ 0,5mm ausgebildet sind, wobei die in einem Umfangserstreckungsabschnitt eines Profilelementes ausgebildeten Feinstrillen in der radial äußeren Oberfläche jeweils parallel zueinander erstreckt ausgerichtet sind und sich jeweils ausgehend von einem der beiden Feineinschnitte unter Einschluss eines Neigungswinkels α mit 40° ≤ α ≤ 60° zur Umfangsrichtung U ausgerichtet zum anderen Feineinschnitt hin erstrecken und im Abstand a zu diesem anderen Feineinschnitt (10) enden und dass die Breite b mit 0,1 mm ≤ b ausgebildet ist.

Die Ausbildung ermöglicht es, dass in dem Umfangserstreckungsabschnitt des Profilelementes bei einem Gleiten auf Eis mit Gleitrichtung in Richtung vom zweiten zum ersten Feineinschnitt zusätzliches Schmelzwasser aus dem Umfangserstreckungsabschnitt in den ersten Feineinschnitt geleitet und dann durch diesen Feineinschnitt aus dem Bereich des Profilelements abgeleitet wird. Dabei wird mit Hilfe der Gleitbewegung selbst das Schmelzwasser aus dem Umfangserstreckungsabschnitt und den Feinabschnitten gefördert. Die Ausrichtung der Feinstrillen parallel zueinander und mit dem Winkel α ermöglicht dabei, dass durch die Ausnutzung der Gleitbewegung selbst das Wasser zielgerichtet schnell in den ersten Feineinschnitt gefördert und eine optimierte, besonders gleichmäßige Wasserabfuhr umgesetzt werden kann. Die Ausbildung der Feineinschnitte mit ihrer Breite b mit b ≤ 0,3mm und Tiefe T mit T≤0,5mm ermöglicht die Umsetzung einer sicheren Abfuhr des Schmelzwassers aus dem Bereich der Reiboberfläche ohne merkliche Beeinträchtigung der Blocksteifigkeit. Durch die Ausbildung der Feinstrillen mit ihrer Erstreckung ausgehend von dem einen Feineinschnitt bis in einen Abstand a vom zweiten Feineinschnitt, wobei die Feinstrillen im Abstand a vom zweiten Feineinschnitt enden, wird sichergestellt, dass Wasser aus dem zweiten Feineinschnitt beim Gleiten nicht durch die Feinstrillen in die zwischen Umfangserstreckungsabschnitt und Eis gebildete Reibfläche eingeleitet wird. Somit kann auf diese Weise mit einfachen Mitteln unter Nutzung des zwischen radial äußerer Oberfläche im Umfangserstreckungsabschnitt des Profilelementes und der Eisfläche gebildeten hydrodynamischen Druckes und der Gleitbewegung Schmelzwasser verbessert in den ersten Feineinschnitt und somit aus dem Umfangserstreckungsabschnitt abgeleitet werden und hierdurch ein besserer Griff auf Eis umgesetzt werden. **Durch die Ausbildung mit 0,1 mm ≤ b kann in einfacher Weise ein Schließen der Feinstrille verhindert und auch unter Kontaktdruck zwischen Straße und Profilelement ein Wasserdurchfluss wirksam ermöglicht werden.**

Besonders vorteilhaft ist die Ausbildung eines Fahrzeugreifens gemäß den Merkmalen von Anspruch **2**, wobei der Abstand a mit 0,5mm ≤ a ≤ 2mm ausgebildet ist. Der Abstand a ist dabei groß genug, um auch bei Verschleiß der in Gleitrichtung vorderen Kante des Umfangserstreckungsabschnitts noch eine ausreichend wirksame Wischlippe sicherzustellen, und dabei klein genug, um eine ausreichende Wirksamkeit der Feinstrillen sicherzustellen.

Besonders vorteilhaft ist die Ausbildung eines Fahrzeugreifens gemäß den Merkmalen von Anspruch **3**, wobei die in Umfangsrichtung U gemessene Erstreckungslänge e der Feinstrillen jeweils mit (0,5 L)≤e ausgebildet ist, wobei L die in der Position der Einmündung der Feinstrille in den einen Feineinschnitt in der radial äußeren Oberfläche in Umfangsrichtung U gemessene Erstreckungslänge des Umfangserstreckungsabschnittes ist. Hierdurch kann in einfacher Weise ein besonders effektiver Wasserabtransport gerade im Bereich großer Schmelzwasserfilmdicke ermöglicht werden.

Besonders vorteilhaft ist die Ausbildung eines Fahrzeugreifens gemäß den Merkmalen von Anspruch **4**, wobei die Tiefe T mit 0,2mm ≤ T ausgebildet ist. hierdurch kann auch nach leichtem Verschleiß die Wirksamkeit noch sichergestellt werden.

Besonders vorteilhaft ist die Ausbildung eines Fahrzeugreifens gemäß den Merkmalen von Anspruch **5**, wobei der Abstand d mit 0,5mm ≤ d ausgebildet ist. Dies ermöglicht in einfacher Weise die Umsetzung einer optimalen Verhältnisses aus großer Kontaktfläche und gutem Schmelzwasserabtransport.

Besonders vorteilhaft ist die Ausbildung eines Fahrzeugreifens gemäß den Merkmalen von Anspruch **6**, wobei das Profilelement ein Profilblockelement - insbesondere einer Profilblockreihe - ist.

Besonders vorteilhaft ist die Ausbildung eines Fahrzeugreifens gemäß den Merkmalen von Anspruch **7**, wobei sich wenigstens die in einem Umfangserstreckungsabschnitt ausgebildeten Feinstrillen jeweils ausgehend von dem einen Feineinschnitt entgegen der Drehrichtung D des Fahrzeugluftreifens bei Vorwärtsfahrt zum anderen Feineinschnitt hin erstrecken und im Abstand a zu diesem anderen Feineinschnitt enden. Die Ausbildung ermöglicht einen optimalen Einsatz in asymetrischen, nicht laufrichtungsgebundenen Profilen und auch eine einfache Optimierung von Traktion und Bremsen.

Die Erfindung wird im Folgenden an Hand der in den Figuren 1 bis 12 dargestellten Ausführungsbeispiele näher erläutert. Hierin zeigen
- Fig.1: einen Umfangsabschnitt eines Laufstreifenprofils eines Fahrzeugluftreifens in Draufsicht am Beispiel eines laufrichtungsgebundenen Profils,
- Fig.2: ein Profilblockelement des Laufstreifenprofils von Fig.1 in Draufsicht,
- Fig.3: das Profilblockelement von Fig.2 in Schnittdarstellung gemäß Schnitt III-III von Fig.2,
- Fig.4: einen Umfangserstreckungsabschnitt des Profilblockelementes von Fig.2 in Draufsicht,
- Fig.5: Profilblockelement von Fig.2 in Schnittdarstellung gemäß Schnitt V-V von Fig.4,
- Fig.6: einen Umfangserstreckungsabschnitt eines Laufstreifenprofils in alternativer Ausbildung in Draufsicht,
- Fig.7: einen Umfangserstreckungsabschnitt eines Laufstreifenprofils in weiterer alternativer Ausführung in Draufsicht,
- Fig.8: ein Profilblockelement eines Laufstreifenprofils in Draufsicht analog zur Darstellung von Fig.2 in alternativer Ausführung,
- Fig.9: ein Profilblockelement in Draufsicht in weiterer alternativer Ausführung,
- Fig.10: ein Profilblockelement in Draufsicht in weiterer alternativer Ausführung,
- Fig.11: ein Profilblockelement in Draufsicht in weiterer alternativer Ausführung und
- Fig.12: ein Profilblockelement in Draufsicht in weiterer alternativer Ausführung.

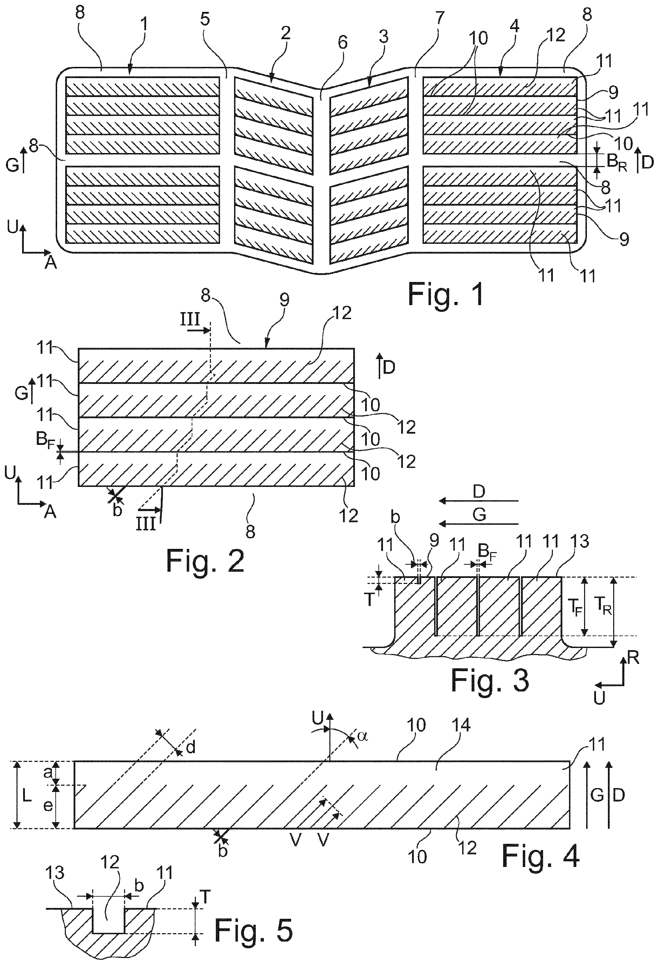

Die Figuren 1 bis 5 zeigen ein Laufstreifenprofil eines Fahrzeugluftreifens mit besonderen Wintereigenschaften, wie beispielsweise eines Winterreifens für Personenkraftwagen (PKW). Das Laufstreifenprofil ist in bekannter Weise mit mehreren in axialer Richtung A des Fahrzeugluftreifens nebeneinander angeordneten Profilblockreihen 1, 2, 3 und 4 ausgebildet, welche jeweils in bekannter Weise durch über den gesamten Umfang des Fahrzeugluftreifens erstreckte und in Umfangsrichtung U des Fahrzeugluftreifens ausgerichtete Umfangsrillen 5, 6 bzw. 7 in axialer Richtung A voneinander getrennt sind. Die Profilblockreihe 1 ist dabei von der Profilblockreihe 2 durch die Umfangsrille 5 getrennt. Die Profilblockreihe 2 und die Profilblockreihe 3 sind durch die Umfangsrille 6 voneinander getrennt. Die Profilblockreihe 3 und die Profilblockreihe 4 sind durch die Umfangsrille 7 voneinander getrennt. Die Profilblockreihen 1 und 4 sind jeweils in einer Reifenschulter ausgebildet und bilden Schulterprofilblockreihen. Die Profilblockreihen 2 und 3 sind zwischen den beiden Schulterprofilblockreihen 1 und 4 ausgebildet.

Die Profilblockreihen 1, 2, 3 und 4 sind jeweils in bekannter Weise aus in Umfangsrichtung U des Fahrzeugluftreifens hintereinander angeordneten und jeweils durch Querrillen 8 voneinander beabstandeten Profilblockelementen 9 bekannter Art ausgebildet. Die Querrillen 8 einer Profilblockreihe 1, 2, 3 bzw. 4 sind jeweils durch die gesamte axiale Erstreckung der jeweiligen Profilblockreihe 1, 2, 3, bzw. 4 hindurch erstreckt ausgebildet. Die Querrillen 8 der Schulterprofilblockreihen 1 und 4 sind jeweils in axialer Richtung A des Fahrzeugluftreifens ausgerichtet. Die Querrillen 8 der Profilblockreihen 2 und 3 sind jeweils unter Einschluss eines Neigungswinkels von maximal 20° zur axialen Richtung A des Fahrzeugluftreifens ausgerichtet und somit als Schrägrillen ausgebildet.

Die Umfangsrillen 5, 6, 7 sowie die Querrillen 8 sind in radialer Richtung R des Fahrzeugluftreifens nach innen hin jeweils durch einen Rillengrund begrenzt. Die Profilblockelemente 9 der Profilblockreihen 1, 2, 3 und 4 sind in radialer Richtung R des Fahrzeugluftreifens nach außen hin jeweils durch eine, die Straßenkontaktoberfläche bildende radialäußere Oberfläche 13 begrenzt.

Am Beispiel eines Profilblockelements 9 der Profilblockreihe 4 wird in den Figuren 2 bis 5 die weitere Ausbildung der Profilblockelemente 9 erläutert.

Wie in den Figuren 2 und 3 zu erkennen ist, sind in der radialäußeren Oberfläche 13 des Profilblockelementes 9 jeweils mehrere in Umfangsrichtung U des Fahrzeugluftreifens hintereinander angeordnete Feineinschnitte 10 bekannter Art ausgebildet, welche parallel zueinander und zu den das Profilblockelement 9 begrenzenden Querrillen 8 ausgerichtet und durch das gesamte Profilblockelement 9 hindurch erstreckt ausgebildet sind. Die Feineinschnitte 10 des Profilblockelements 9 der Profilblockreihe 4 erstrecken sich somit in axialer Richtung A des Fahrzeugluftreifens.

Durch die Feineinschnitte 10 ist das Profilblockelement 9 in der radial äußeren Oberfläche 13 in mehrere in Umfangsrichtung U des Fahrzeugluftreifens hintereinander angeordnete Umfangserstreckungsabschnitten 11 aufgeteilt. In dem in Fig.2 dargestellten Profilblockelement 9 sind beispielhaft drei Feineinschnitte 10 in der radial äußeren Oberfläche 13 ausgebildet, die das Profilblockelement in fünf in Umfangsrichtung U des Fahrzeugluftreifens hintereinander angeordnete Umfangserstreckungsabschnitte 11 aufteilen. Wie in Fig.2 zu erkennen ist, ist dabei ausgehend von der das Profilblockelement 9 in Umfangsrichtung U - in der Darstellung nach unten hin - begrenzenden Querrille 8 in Umfangsrichtung U - in der Darstellung nach oben hin - gesehen bis zu dem in Umfangsrichtung U ersten Feineinschnitt 10 ein erster Umfangserstreckungsabschnitt 11 gebildet. Längs der Umfangserstreckungsrichtung U - in Darstellung von Fig.2 somit nach oben hin - ist zwischen diesem ersten Feineinschnitt 10 bis zu dem diesem nachfolgend angeordneten zweiten Feineinschnitt 10 ein zweiter Umfangserstreckungsabschnitt 11 gebildet. Nachfolgend ist wiederum zwischen dem zweiten Feineinschnitt 10 und dem in Umfangsrichtung U nachfolgend angeordneten dritten Feineinschnitt 10 ein dritter Umfangserstreckungsabschnitt 11 und anschließend zwischen dem dritten Feineinschnitt 10 und der das Profilblockelement 9 nachfolgend angeordneten, das Profilblockelement 9 begrenzenden Querrille 8 ein vierter Umfangserstreckungsabschnitt 11 gebildet. Somit ist jeweils zwischen zwei in Umfangserstreckungsrichtung U hintereinander angeordneten Feineinschnitten 10 des Profilblockelementes 9 ein Umfangserstreckungsabschnitt 11 gebildet. Ebenso ist jeweils zwischen der das Profilblockelement 9 in Umfangsrichtung U zu einer Seite hin begrenzenden Querrille 8 und dem dieser Querrille 8 in Umfangsrichtung U nächstliegend ausgebildeten Feineinschnitt 10 des Profilblockelementes 9 ein Umfangserstreckungsabschnitt 11 ausgebildet.

Wie in Fig.1 und 3 dargestellt ist, sind die Querrillen 8 jeweils mit einer Rillenbreite B_{R} und mit einer - ausgehend von der radial äußeren Oberfläche 13 der die Querrille 8 begrenzenden Profilblockelemente 9 in radialer Richtung R nach innen hin gemessenen - Tiefe T_{R} ausgebildet. Die Feineinschnitte 10 sind mit einer in der radial äußeren Oberfläche 13 gemessenen Breite B_{F} und mit einer in radialer Richtung R nach innen hin gemessenen Tiefe T_{F} ausgebildet. Dabei ist B_{F} mit 0,4mm≤B_{F}≤1mm und B_{Q} ist mit 1mm<B_{Q}≤10mm ausgebildet mit B_{Q}>B_{F}. Die Tiefe T_{Q} ist mit 4mm≤T_{Q}≤P_{T} ausgebildet, wobei P_{T} die maximale Profiltiefe ist. P_{T} ist dabei beispielsweise mit 8mm bis 10mm gewählt ausbildet. Die Tiefe T_{F} ist mit 2mm≤T_{F}≤10mm ausgebildet.

In den Figuren1 bis 4 ist mit einem Pfeil G die Gleitrichtung eingetragen, für welche das Profilblockelement 9 für den Einsatz auf Eis optimiert ausgebildet ist. Wie in den Fig.1,2 und 4 zu erkennen ist, ist die Gleitrichtung G in dieser Darstellung diejenige Umfangsrichtung U, die in der Darstellung von unten nach oben hin gerichtet eingetragen ist. Am Beispiel eines zwischen zwei in Umfangsrichtung U hintereinander angeordneten Feineinschnitten 10 ausgebildeten Umfangserstreckungsabschnitts 11, ist die weitere Ausbildung der Umfangserstreckungsabschnitte 11 eines Profilblockelementes 9 in Fig.4 näher dargestellt.

Dabei ist zu erkennen, dass im Umfangserstreckungsabschnitt 11 in der radialäußeren Oberfläche 13 eine Vielzahl von parallel zueinander und unter Einschluss eines Neigungswinkels α zur Umfangsrichtung U ausgerichtete Feinstrillen 12 ausgebildet sind, welche sich jeweils ausgehend von dem den Umfangserstreckungsabschnitt 11 in Gleitrichtung G vorgeordnet begrenzenden Feineinschnitt 10 über eine in Umfangsrichtung U gemessene Erstreckungslänge e bis in einen Abstand a von der, den Umfangserstreckungsabschnitt 11 in Gleitrichtung G nachgeordnet begrenzenden Feineinschnitt 10 erstrecken und dort enden.

Der Neigungswinkel α ist dabei mit 40°≤α≤60° gewählt. Beispielsweise ist α=45° gewählt. Der Abstand a ist mit 0,5mm≤a≤2mm gewählt. Beispielsweise ist a=1mm gewählt. Der Abstand L zwischen den beiden den Umfangserstreckungsabschnitt 11 begrenzenden Feineinschnitten 10 ist - wie in Figur 4 dargestellt ist - mit L=(a+e) ausgebildet. Die Erstreckungslänge e ist mit (0,5L)≤e gewählt.

Die in einem Umfangserstreckungsabschnitt 11 ausgebildeten parallelen Feinstrillen 12 sind äquidistant zueinander angeordnet. Zwei benachbarte Feinstrillen 12 sind dabei jeweils in einem Abstand d zueinander angeordnet mit 0,5mm≤d≤2mm. Beispielsweise ist d mit d=1mm ausgebildet.

Die Feinstrillen 12 sind jeweils längst ihrer Erstreckung mit einer konstanten Breite b ausgebildet mit 0,1mm≤b≤0,3mm ausgebildet. Beispielsweise ist b=0,1mm gewählt.

In dem längs der Erstreckung des Profilblockelementes 9 in Gleitrichtung G ersten Umfangserstreckungsabschnitt 11 des Profilblockelementes 9 erstrecken sich - wie in Figur 2 zu erkennen ist - die Feinstrillen 12 jeweils ausgehend von der den ersten Umfangserstreckungsabschnitt 11 begrenzenden Querrille 8 ausgehend in Richtung zu der der dieser Querrille 8 in Gleitrichtung G nachfolgend angeordneten ersten Feineinschnitt 10 und enden im Abstand a von diesem Feineinschnitt 10. In dem vierten Umfangserstreckungsabschnitt 11 des Profilblockelementes 9, welcher durch die in Gleitrichtung G das Profilblockelement 9 nachgeordnet begrenzende Querrille 8 begrenzt wird, erstrecken sich die Feinstrillen 12 jeweils ausgehend von dem zu dieser Querrille 8 nächstliegend vorgeordneten und diesen Umfangserstreckungsabschnitt 11 begrenzenden Feineinschnitt 10 in Richtung zu dieser Querrille 8 und enden dort im Abstand a von dieser Querrille 8.

In analoger Weise zu der Ausbildung der Profilblockelemente 9, der Profilblockreihe 4 sind in einem in Fig. 1 dargestellten Ausführungsbeispiel auch die Profilblockelemente 9 der Profilblockreihen 1, 2 und 3 jeweils mit durch Feineinschnitte 10 begrenzten Umfangserstreckungsabschnitten 11 und mit Feinstrillen 12 ausgebildet.

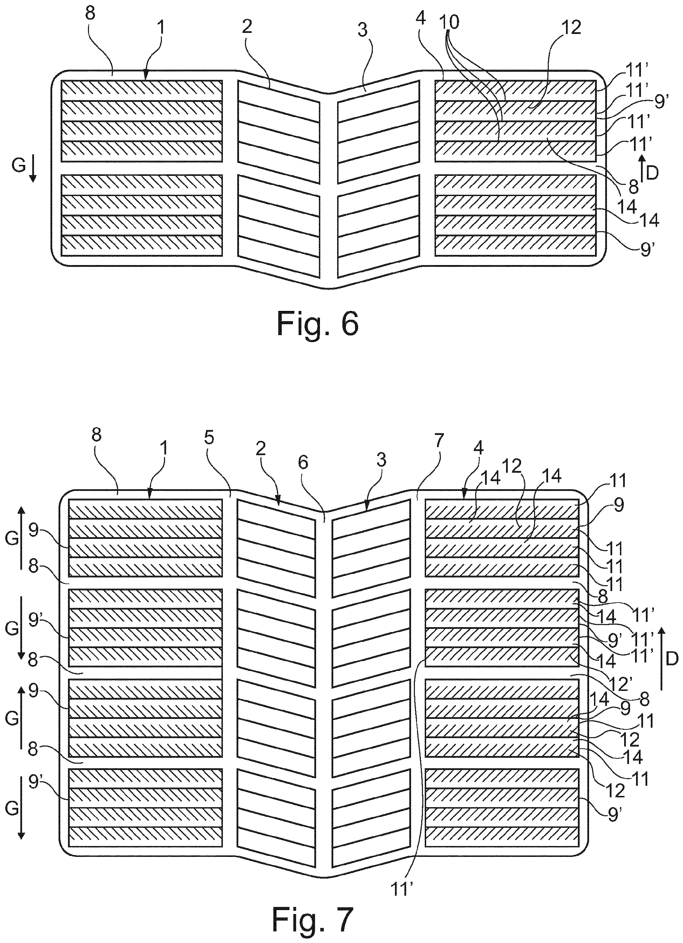

In anderer Ausführung sind - wie beispielsweise in den Figuren 6 und 7 dargestellt - die Profilblockreihen 2 und 3 ohne derartige Feinstrillen 12 ausgebildet sind.

In den Figuren 1 bis 4 ist die Drehrichtung D bei Vorwärtsfahrt des Fahrzeugluftreifens mit für Bremsen auf Eis optimiert ausgebildetem Laufstreifenprofil eingetragen. Dabei ist zu erkennen, dass bei diesem Ausführungsbeispiel die Drehrichtung D bei Vorwärtsfahrt der eingetragenen, für Bremsen auf Eis optimierten Gleitrichtung G entspricht.

Fig.6 zeigt ein Ausführungsbeispiel, bei welchem die Profilblockreihen 4 und 1 jeweils mit durch Querrillen 8 von einander getrennten Profilblockelementen 9'ausgebildet sind. Die Profilblockelemente 9'sind - analog zu den in Fig.2 dargestellten Profilblockelementen 9 des Laufstreifenprofils von Fig.1 - mit durch jeweils zwei Feineinschnitte 10 bzw. durch eine Querrille 8 und einen Feineinschnitt 10 begrenzten Umfangserstreckungsabschnitten 11'ausgebildet. Dabei sind in den Umfangserstreckungsabschnitten 11 jeweils längs der optimierten Gleitrichtung G gesehen von dem den jeweiligen Umfangserstreckungsabschnitt 11' vorgeordnet begrenzenden Feineinschnitt 10 bzw. Querrille 8 ausgehend Richtung zum nachgeordnet begrenzenden Feineinschnitt 10 bzw. Querrille 8 erstreckten Feinstrillen 12 ausgebildet, die im Abstand a von diesem nachgeordnet begrenzenden Feineinschnitt 10 bzw. Querrille 8 enden. In dem in Figur 6 dargestellten Ausführungsbeispiel ist die optimierte Gleitrichtung G entgegen der für den Fahrzeugluftreifen für Vorwärtsfahrt ausgelegten Drehrichtung D ausgebildet. Die Profilblockelemente 9' sind hierdurch für ein optimiertes Antreiben auf Eis ausgelegt.

Fig.7 zeigt ein alternatives Ausführungsbeispiel, bei welchem die Profilblockreihe 4 und auch die Profilblockreihe 1 längs ihrer Erstreckung in Umfangsrichtung U gesehen jeweils aus in alternierender Abfolge hintereinander angeordneten Profilblockelemente 9 und 9' ausgebildet sind. Die Profilblockelemente 9 sind in ihrer Gleitrichtung G analog zu den Profilblockelementen 9 der Figuren 1 bis 5 für ein optimiertes Gleiten beim Bremsen und die Profilblockelemente 9' sind in ihrer Gleitrichtung G analog zu den Profilblockelementen 9' der Fig.6 für ein optimiertes Antreiben auf Eis angelegt. Die optimierte Gleitrichtung G der Profilblockelemente 9 entspricht somit auch der Drehrichtung D des in Fig.7 dargestellten Fahrzeugluftreifens bei Vorwärtsfahrt. Die optimierte Gleitrichtung G der Profilblockelemente 9' ist entgegen der Drehrichtung D bei Vorwärtsfahrt gewählt.

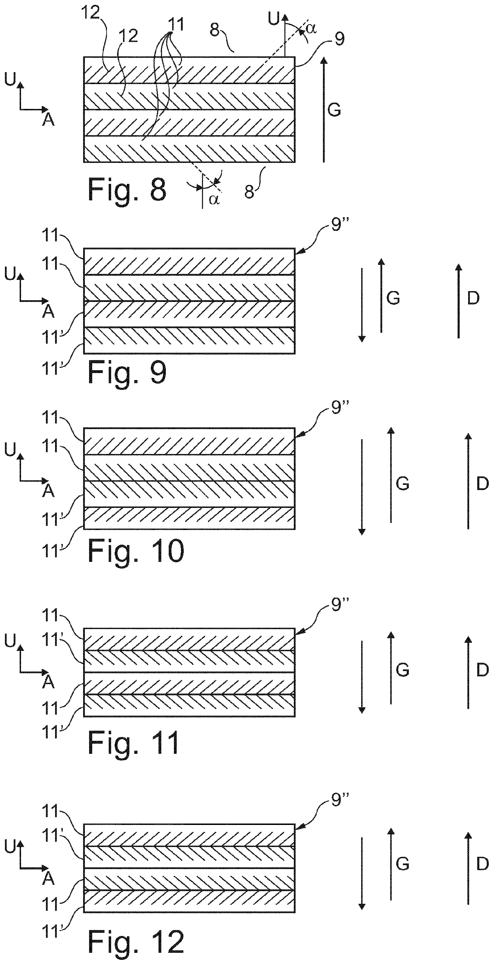

Fig.8 zeigt ein Profilblockelement 9, bei welchem erste Umfangserstreckungsabschnitte 11, in denen die Feinstrillen 12 zur einen axialen Seite hin geneigt sind, und zweite Umfangserstreckungsabschnitte 11, in denen die Feinstrillen 12 zur entgegengesetzten axialen Seite hin geneigt sind, in Gleitrichtung G in alternierender Abfolge hintereinander angeordnet sind.

Die Figuren 9 bis 12 zeigen unterschiedliche Ausführungsbeispiele von Profilblockelementen 9", welche jeweils aus ersten Umfangserstreckungsabschnitten 11 und aus zweiten Umfangserstreckungsabschnitten 11' ausgebildet sind. Die Umfangserstreckungsabschnitte 11 sind dabei - analog zu dem in Fig.4 dargestellten Ausführungsbeispiel - jeweils mit ihrer optimierten Gleitrichtung G in Drehrichtung D bei Vorwärtsfahrt und die Umfangserstreckungsabschnitte 11' sind jeweils mit ihrer optimierten Gleitrichtung G entgegen der Drehrichtung D bei Vorwärtsfahrt ausgebildet. Auf diese Weise ist das Profilblockelement 9 mit den Umfangserstreckungsabschnitten 11 zur Optimierung des Bremsens auf Eis und mit den Umfangserstreckungsabschnitten 11' zur Optimierung des Antriebes auf Eis ausgelegt. In den Ausführungsbeispielen der Figuren 9 und 10 sind dabei die Umfangserstreckungsabschnitte 11 jeweils benachbart zueinander und die Umfangserstreckungsabschnitte 11' sind ebenfalls jeweils benachbart zueinander ausgebildet. In Analogie zur Darstellung von Figur 8 ist die Neigungsrichtung des einen Umfangserstreckungsabschnitts 11 entgegen der Neigungsrichtung des anderen Umfangserstreckungsabschnittes 11 und der Neigungsrichtung des einen Umfangserstreckungsabschnittes 11' entgegen der Neigungsrichtung des anderen Umfangserstreckungsabschnitts 11' gewählt.

Dabei ist die Neigungsrichtung der in den zueinander benachbart ausgebildeten Umfangserstreckungsabschnitte 11 und 11' ausgebildeten Feinstrillen gleich gewählt - wie beispielsweise in Fig.10 dargestellt ist - oder in anderer Ausführung entgegengesetzt zueinander gewählt - wie es beispielsweise in Fig.9 dargestellt ist- .

Die Figuren 11 und 12 zeigen Ausführungsbeispiele bei welchem längs der Umfangsrichtung U des Profilblockelementes 9"- in alternativer Abfolge Umfangserstreckungsabschnitte 11' und 11 hintereinander angeordnet sind.

Die Ausführungsbeispiele der Profilblockreihen 4 und 8 von Fig.7 mit alternativer Abfolge aus Profilblockelementen 9 und 9', welche jeweils in entgegengesetzter Umfangsrichtung U optimierte Gleitrichtungen G aufweisen, eignet sich - ebenso wie die Ausführungen von Profilblockelementen der Figuren 9 bis12, bei welchen die Profilblockelemente 9"mit für entgegengesetzt optimierte Gleitrichtungen G ausgebildeten Umfangserstreckungsabschnitten 11 und 11' ausgebildet sind, auch für einen optimierten Einsatz bei laufrichtungsungebundenen Laufstreifenprofilen.

### Bezugszeichenliste

- 1: Profilblockreihe
- 2: Profilblockreihe
- 3: Profilblockreihe
- 4: Profilblockreihe
- 5: Umfangsrille
- 6: Umfangsrille
- 7: Umfangsrille
- 8: Querrille
- 9: Profilblockelement
- 10: Feineinschnitt
- 11: Umfangserstreckungsabschnitt
- 12: Feinsrille
- 13: Radial äußere Oberfläche
- 14: Abschnitt

## Patentansprüche

1. Fahrzeugluftreifen mit einem profilierten Laufstreifen mit durch Rillen (5,6,7,8) von einander beabstandeten, radial erhabenen Profilelementen, welche in radialer Richtung nach außen hin durch eine radial äußere, die Bodenkontaktfläche bildende radial äußere Oberfläche (13) begrenzt werden,
wobei in der radial äußeren Oberfläche (13) von wenigstens einem Profilelement (9) in Umfangsrichtung U des Fahrzeugluftreifens hintereinander angeordnet Feineinschnitte (10) ausgebildet sind, die sich jeweils in axialer Richtung A des Fahrzeugluftreifens durch das Profilelement (9) hindurch erstrecken und deren größte Richtungskomponente ihrer Erstreckung in axialer Richtung A des Fahrzeugluftreifens ausgerichtet ist, wobei jeweils zwischen zwei in Umfangsrichtung U benachbart hintereinander angeordneten Feineinschnitten (10) ein Umfangserstreckungsabschnitt (11) des Profilelementes (9) ausgebildet ist, wobei in der radial äußeren Oberfläche (13) in wenigstens einem Umfangserstreckungsabschnitt (11) des Profilelementes (9) mit einem Abstand d voneinander beabstandet Feinstrillen (12) angeordnet sind, die jeweils mit einer Breite b mit b ≤ 0,3mm und mit einer Tiefe T mit T ≤ 0,5mm ausgebildet sind,
**dadurch gekennzeichnet,**
**dass** die in einem Umfangserstreckungsabschnitt (11) eines Profilelementes (9) ausgebildeten Feinstrillen (12) in der radial äußeren Oberfläche (13) jeweils parallel zueinander erstreckt ausgerichtet sind und sich jeweils ausgehend von einem der beiden Feineinschnitte (10) unter Einschluss eines Neigungswinkels α mit 40°≤α≤60° zur Umfangsrichtung U ausgerichtet zum anderen Feineinschnitt (10) hin erstrecken und im Abstand a zu diesem anderen Feineinschnitt (10) enden **und dass die Breite b mit 0,1mm ≤ b ausgebildet ist.**

2. Fahrzeugluftreifen gemäß den Merkmalen von Anspruch 1, wobei der Abstand a mit 0,5mm ≤ a ≤ 2mm ausgebildet ist.

3. Fahrzeugluftreifen gemäß den Merkmalen von einem oder mehreren der vorangegangenen Ansprüche,
wobei die in Umfangsrichtung U gemessene Erstreckungslänge e der Feinstrillen (12) jeweils mit (0,5 L)≤e ausgebildet ist,
wobei L die in der Position der Einmündung der Feinstrille (12) in den einen Feineinschnitt (10) in der radial äußeren Oberfläche (13) in Umfangsrichtung U gemessene Erstreckungslänge des Umfangserstreckungsabschnittes (11) ist.

4. Fahrzeugluftreifen gemäß den Merkmalen von einem oder mehreren der vorangegangenen Ansprüche,
wobei die Tiefe T mit 0,2mm ≤ T ausgebildet ist.

5. Fahrzeugluftreifen gemäß den Merkmalen von einem oder mehreren der vorangegangenen Ansprüche,
wobei der Abstand d mit 0,5mm ≤ d ausgebildet ist.

6. Fahrzeugluftreifen gemäß den Merkmalen von einem oder mehreren der vorangegangenen Ansprüche,
wobei das Profilelement (9) ein Profilblockelement - insbesondere einer Profilblockreihe (4) - ist.

7. Fahrzeugluftreifen gemäß den Merkmalen von einem oder mehreren der vorangegangenen Ansprüche,
wobei sich wenigstens die in einem Umfangserstreckungsabschnitt (11) ausgebildeten Feinstrillen (12) jeweils ausgehend von dem einen Feineinschnitt (10) entgegen der Drehrichtung D des Fahrzeugluftreifens bei Vorwärtsfahrt zum anderen Feineinschnitt (10) hin erstrecken und im Abstand a zu diesem anderen Feineinschnitt (10) enden.

## Claims

1. Pneumatic vehicle tyre comprising a profiled tread with radially raised profile elements that are spaced apart from one another by grooves (5, 6, 7, 8) and are outwardly bounded in the radial direction by a radially outer radially outer surface (13) forming the ground contact surface,
wherein, in the radially outer surface (13) of at least one profile element (9), sipes (10) are formed arranged one behind the other in the circumferential direction U of the pneumatic vehicle tyre, which respectively extend through the profile element (9) in the axial direction A of the pneumatic vehicle tyre and of which the greatest directional component of their extent is aligned in the axial direction A of the pneumatic vehicle tyre, wherein a portion (11) of the circumferential extent of the profile element (9) is respectively formed between two sipes (10) arranged adjacently one behind the other in the circumferential direction U,
wherein, in the radially outer surface (13), ultrafine grooves (12) are arranged in at least one portion (11) of the circumferential extent of the profile element (9), spaced apart from one another by a distance d, which are respectively formed with a width b, with b ≤ 0.3 mm, and with a depth T, with T ≤ 0.5 mm,
**characterized**
**in that** the ultrafine grooves (12) formed in a portion (11) of the circumferential extent of a profile element (9) are respectively aligned so as to extend parallel to one another in the radially outer surface (13) and, starting from one of the two sipes (10), extend to the other sipe (10) to include an angle of inclination α, with 40° ≤ α ≤ 60°, to the circumferential direction U and end at a distance a from this other sipe (10) **and in that the width b is formed with 0.1 mm ≤ b.**

2. Pneumatic vehicle tyre according to the features of Claim 1,
wherein the distance a is formed with 0.5 mm ≤ a ≤ 2 mm.

3. Pneumatic vehicle tyre according to the features of one or more of the preceding claims,
wherein the length of extent e, measured in the circumferential direction U, of the ultrafine grooves (12) is respectively formed with (0.5 L) ≤ e, wherein L is the length of extent of the portion (11) of the circumferential extent measured in the circumferential direction U at the position of the entry of the ultrafine groove (12) into the one sipe (10) in the radially outer surface (13).

4. Pneumatic vehicle tyre according to the features of one or more of the preceding claims,
wherein the depth T is formed with 0.2 mm ≤ T.

5. Pneumatic vehicle tyre according to the features of one or more of the preceding claims,
wherein the distance d is formed with 0.5 mm ≤ d.

6. Pneumatic vehicle tyre according to the features of one or more of the preceding claims,
wherein the profile element (9) is a profile block element - in particular a row of profile blocks (4).

7. Pneumatic vehicle tyre according to the features of one or more of the preceding claims,
wherein at least the ultrafine grooves (12) formed in a portion (11) of the circumferential extent respectively extend from the one sipe (10) to the other sipe (10) counter to the direction of rotation D of the pneumatic vehicle tyre during forward travel and end at the distance a from this other sipe (10).

## Revendications

1. Pneumatique de véhicule comprenant une bande de roulement profilée pourvue d'éléments profilés surélevés radialement, espacés les uns des autres par des rainures (5, 6, 7, 8) et délimités dans la direction radiale vers l'extérieur par une surface radialement extérieure (13) radialement extérieure formant la surface de contact au sol, des incisions fines (10) étant ménagées les unes derrière les autres dans la direction circonférentielle U du pneumatique du véhicule dans la surface radialement extérieure (13) d'au moins un élément profilé (9), chacune d'elles s'étendant à travers l'élément profilé (9) dans la direction axiale A du pneumatique de véhicule et leur composante directionnelle la plus grande de leur extension étant orientée dans la direction axiale A du pneumatique de véhicule, une portion d'extension circonférentielle (11) de l'élément profilé (9) étant formée entre deux incisions fines (10) ménagées l'une derrière l'autre de manière adjacente dans la direction circonférentielle U, des rainures très fines (12) espacées les unes des autres d'une distance d étant ménagées dans la surface radialement extérieure (13) dans au moins une portion d'extension circonférentielle (11) de l'élément profilé (9), chacune d'elles étant ménagée avec une largeur b telle que b ≤ 0,3 mm et avec une profondeur T telle T ≤ 0,5 mm,
**caractérisé**
**en ce que** les fines rainures (12) formées dans une section d'extension circonférentielle (11) d'un élément profilé (9) sont chacune orientées parallèlement les unes aux autres dans la surface radialement extérieure (13) et s'étendent en partant chacune de l'une des deux fines incisions (10) comprenant un angle d'inclinaison α avec 40° ≤α≤ 60° dans la direction circonférentielle U vers l'autre incision fine (10) et se terminent à une distance a de cette autre incision fine (10) et **en ce que** la largeur b est telle que 0,1 mm ≤b.

2. Pneumatique de véhicule selon les caractéristiques de la revendication 1, la distance a ménagée étant telle que 0,5 mm ≤ a ≤ 2 mm.

3. Pneumatique de véhicule selon les caractéristiques d'au moins une des revendications précédentes, la longueur d'extension e des rainures très fines (12), mesurée dans la direction circonférentielle U, étant à chaque fois telle que (0,5 L) ≤ e, L étant la longueur d'extension de la portion d'extension circonférentielle (11) mesurée dans la direction circonférentielle U dans la position où la rainure très fine (12) s'ouvre dans l'une des incisions fines (10) ménagées dans la surface radialement extérieure (13).

4. Pneumatique de véhicule selon les caractéristiques d'au moins une des revendications précédentes, la profondeur T étant telle que 0,2 mm ≤ T.

5. Pneumatique de véhicule selon les caractéristiques d'au moins une des revendications précédentes, la distance d étant telle que 0,5 mm ≤ d.

6. Pneumatique de véhicule selon les caractéristiques d'au moins une des revendications précédentes, l'élément profilé (9) étant un élément formant bloc profilé, en particulier une rangée de blocs profilés (4) .

7. Pneumatique de véhicule selon les caractéristiques d'au moins une des revendications précédentes, au moins les rainures très fines (12) ménagées dans une portion d'extension circonférentielle (11) s'étendant chacune de l'une des incisions fines (10) dans le sens opposé au sens de rotation D du pneumatique de véhicule pendant l'avancement à l'autre incision fine (10) et se terminant à une distance a de cette autre incision fine (10) .
